# EUROPÄISCHE PATENTSCHRIFT

(11) **EP 0 488 937 B1**
(45) Veröffentlichungstag und Bekanntmachung des Hinweises auf die Patenterteilung: **24.01.1996**
(21) Anmeldenummer: 91710049.7
(22) Anmeldetag: 27.11.1991
(51) Int. Cl.: B60R 21/26

(54) **Anzündeinheit, insbesondere für den Gasgenerator einer Kraftfahrzeuginsassen-Aufprallschutzvorrichtung**
Detonator, in particular for the gas generator of a passenger protective device in an automotive vehicle
Détonateur, en particulier pour le générateur de gaz d'un dispositif de protection de passager d'un véhicule automobile

(30) Priorität: 28.11.1990 DE 4037770
(43) Veröffentlichungstag der Anmeldung: 03.06.1992
(73) Patentinhaber: Dynamit Nobel Aktiengesellschaft, D-53839 Troisdorf (DE)
(72) Erfinder: Albrecht, Uwe, W-8500 Nürnberg (DE); Bretfeld, Anton, W-8510 Fürth (DE); Kraft, Josef, W-8438 Berg. (DE)

(56) Entgegenhaltungen:
- EP-A- 0 168 588
- US-A- 3 960 390
- US-A- 4 722 551

## Beschreibung

Die Erfindung betrifft eine Anzündeinheit, insbesondere für den Gasgenerator einer Kraftfahrzeuginsassen-Aufprallschutzvorrichtung nach dem Oberbegriff des Patentanspruchs 1.

Eine Anzündeinheit für einen Gasgenerator ist aus US-PS 4 437 681 bekannt. Die Anzündeinheit ist mit einer zylindrischen Kammer versehen, in der ein elektrisch ansteuerbares Anzündelement und eine von diesem zündbare Anzündladung untergebracht sind. Die Zylinderwand der Kammer ist mit mehreren Öffnungen versehen, die durch eine Folie oder dergleichen verschlossen sind. Die Kammer ist in dem Gehäuse eines Gasgenerators angeordnet, und in diesem von dem gasentwickelnden Material (der druckgaserzeugenden Ladung oder dem Pulverbett) umgeben. Sobald die Anzündladung von dem Anzündelement gezündet ist, öffnen sich infolge des Druckanstiegs innerhalb der Kammer und der bei der Zündung entstehenden heißen Gase die Öffnungen, so daß die Gase bzw. die Flamme über die Öffnungen zur druckgaserzeugenden Ladung gelangen, die gezündet wird. In der Praxis ist es nicht gewährleistet, daß die Öffnungen der Kammer alle gleichzeitig geöffnet werden. Vielmehr besteht die Gefahr, daß die Folie zunächst im Bereich lediglich einiger Öffnungen zerstört wird. Aufgrund der dabei auftretenden Druckentlastung öffnen sich die übrigen Öffnungen erst zu einem späteren Zeitpunkt oder unter Umständen gar nicht. Damit ist nicht die geforderte gleichmäßige Anzündung der druckgaserzeugenden Ladung gewährleistet.

Aus EP 0 180 408 B1, von der im Oberbegriff des Patentanspruchs 1 ausgegangen wird, ist ein Gasgenerator bekannt, dessen gekapselte Anzündeinheit in einem Zündraum oder Verteilergehäuse bzw. -raum untergebracht ist. Die Anzündeinheit weist ebenfalls eine Kammer auf, in der sich neben dem Anzündelement auch die Anzündladung befindet. Bei gezündeter Anzündladung bricht ab einem gewissen Innendruck die Kammer auf und die Anzündschwaden füllen den gesamten Zündraum aus. Über Durchlässe ist der Zündraum mit dem sich an diesem ringförmig erstreckenden Verbrennungsraum verbunden, in dem sich die druckgasentwickelnde Ladung oder Treibladung befindet. Das Aufbersten der Kammerwand erfolgt relativ undefiniert und nicht vorhersehbar, wobei sich die Anzündschwaden nicht gleichmäßig schnell über die Durchlässe auf den Verbrennungsraum verteilen.

Aus DE 21 50 744 B2 ist eine weitere Anzündeinheit für einen Gasgenerator bekannt, wobei in der Kammerwand der Anzündeinheit mehrere gleichmäßig verteilt angeordnete Durchlaßöffnungen ausgebildet sind, über die der Innenraum der Kammer der Anzündeinheit mit dem Verbrennungsraum verbunden ist. Über einen Verschluß dieser Durchlaßöffnungen vor der Zündung der Anzündladung ist nichts ausgesagt. Sollten die Durchlaßöffnungen stets geöffnet sein, besteht zum einen die Gefahr des Austritts von Material der Anzündladung und zum anderen die Gefahr des Eindringens von Feuchtigkeit. Sofern sämtliche Durchlaßöffnungen zunächst verschlossen sind, kann der bereits oben beschriebene Fall eintreten, daß die Durchlaßöffnungen nicht sämtlich gleichzeitig öffnen, nachdem die Anzündladung gezündet worden ist.

Schließlich ist aus der nachveröffentlichten DE 39 24 500 C1, die auf einer vorangemeldeten Patentanmeldung beruht, eine Anzündeinheit bekannt, bei der die zylindrische Kammer in ihrem oberen Endabschnitt von einer Kappe umgeben ist. Die Kappe ist relativ zur Kammer axial verschiebbar und weist Öffnungen auf, die sich mit denjenigen in einem Kammer und Kappe einschließenden Gehäuse mehr oder weniger überlappen. Die Position der Kappe innerhalb des Gehäuses ist temperaturgesteuert. In dem von der Kappe umgebenden Bereich ist die Kammer mit einer Öffnung zum Austreten der Anzündschwaden versehen. Die in den von der Kappe begrenzten Raum austretenden Anzündschwaden gelangen über die sich zumindest teilweise überlappenden Öffnungen von Kappe und Gehäuse nach außen.

Der Erfindung liegt die Aufgabe zugrunde, eine Anzündeinheit zu schaffen, bei der ein definierter und reproduzierbarer Austritt der Anzündschwaden aus der Anzündeinheit heraus gewährleistet ist.

Zur Lösung dieser Aufgabe wird mit der Erfindung eine Anzündeinheit mit den Merkmalen des Patentanspruchs 1 vorgeschlagen; die Merkmale vorteilhafter Ausgestaltungen sind in den Unteransprüchen angegeben.

Nach der Erfindung ist vorgesehen, daß die Kammer aus einem Behälter und einem Deckel besteht, deren Verbindung untereinander als Sollbruchstelle ausgebildet ist, wobei der Deckel bei gezündeter Anzündladung wegen der Sollbruchverbindung mit dem Behälter von diesem definiert ablösbar ist. Das Verteilergehäuse umgibt den Deckel der Kammer und ist mit dem Behälter fest verbunden. Die Gasaustrittsöffnungen sind derart im Verteilergehäuse angeordnet, daß sie bei mit dem Behälter verbundenen Deckel durch diesen von innen verschlossen sind und bei abgelöstem Deckel freiliegen. Kammer und Verteilergehäuse sind vorteilhafterweise ineinandergesteckt, wobei sich der kappenförmige Deckel im Verteilergehäuse nach Aufbrechung der Sollbruchstelle frei bewegen kann. Ebenso ist eine V-förmige nach außen hin offene Rille in der Kammerwandung denkbar.

Bei mit dem Behälter verbundenem Deckel ist die Anzündeinheit gegen Einflüsse von außen, z.B. gegen das Eindringen von Feuchtigkeit geschützt. Das definierte und reproduzierbare Ablösen des kappenartigen Deckels und das demzufolge ebenfalls definierte und reproduzierbare Öffnen der Austrittsöffnungen im Verteilergehäuse durch den sich ablösenden Deckel resultieren in einer kontrollierten Abgabe der Anzündschwaden aus der Anzündeinheit heraus. Der für die Anzündladung nutzbare Raum der Kammer ist wegen dessen Ausbildung als durch einen kappenartigen Deckel verschlossener Behälter vergrößert, da auch in dem Deckel Anzündladung untergebracht werden kann.

Die Verwendung der erfindungsgemäßen Anzündeinheit ist nicht auf Airbag-Gasgeneratoren beschränkt; vielmehr ist die Anzündeinheit auch als Treibladungsanzünder für patronierte Munition kleineren Kalibers oder bei einer weiteren nachgeschalteten Verstärkerladung auch für größere Kaliber verwendbar. Die Gausaustrittsöffnungen sind vorzugsweise gleichmäßig verteilt über das Verteilergehäuse angeordnet. Soll die Zündung allerdings vornehmlich in einem bestimmten Bereich des Verteilergehäuses erfolgen, ist in diesem Bereich eine Konzentration von Gasaustrittsöffnung vorzunehmen.

Bei der zuvor beschriebenen Weiterbildung der Erfindung weisen sowohl die Kammer als auch das Verteilergehäuse vorteilhafterweise jeweils die Form eines an einer seiner Stirnseiten geschlossenen Zylinders (oder einer an einer Stirnseite geschlossenen Hülse) auf. Beide Zylinderhülsen sind hierbei ineinandergesteckt.

Wie bereits oben dargelegt, ist das Verteilergehäuse in seinem den Deckel umgebenden Bereich derart ausgebildet, daß es den sich bei gezündeter Anzündladung ablösenden Deckel auffängt. In vorteilhafter Weiterbildung der Erfindung ist hierbei vorgesehen, daß zwischen dem Deckel und dem Verteilergehäuse eine Dämpfvorrichtung angeordnet ist, die den Aufprall des Deckels auf die Verteilergehäuse-Innenfläche abfängt. Damit wird der Gefahr des Reißens des Verteilergehäuses infolge des Deckelaufpralls entgegengewirkt und damit eine unkontrollierte Anzündung der druckgaserzeugenden Ladung verhindert. Die Dämpfvorrichtung besteht vorzugsweise aus einem auf den Deckel aufgebrachten oder an der Verteilergehäuse-Innenfläche angeordneten federelastischen Material, vorzugsweise handelt es sich um einen am Deckel befestigten Rundschnurring aus Gummi. Der Gummi-Rundschnurring stellt eine besonders einfache Realisierung der Dämpfvorrichtung dar. Die kinetische Energie des Deckels kann gemäß einer weiteren vorteilhaften Ausgestaltung der Erfindung aber auch in Energie zum Verformen des Verteilergehäuses umgesetzt und damit der Deckelaufprall gedämpft werden. Hierzu ist der Deckel im Verteilergehäuse vorteilhafterweise gleitend verschiebbar angeordnet; ferner sind sowohl der Deckel als auch das Verteilergehäuse (in dessen den Deckel auffangenden Bereich) gewölbt ausgebildet, wobei der Wölbungsradius des Deckels kleiner ist als derjenige des Verteilergehäuses. Der Deckel ist also "flacher" als das Verteilergehäuse in seinem den Deckel auffangenden Bereich; der flache Deckel verformt das gewölbte Verteilergehäuse, wodurch die Aufprallenergie in Verformungsenergie umgesetzt und auf diese Weise eine Bremswirkung erzielt wird.

Zur Beeinflussung des zeitlichen Austretens der Anzündschwaden aus dem Verteilergehäuse über dessen gesamte Oberfläche betrachtet, ist gemäß einer weiteren vorteilhaften Ausgestaltung der Erfindung vorgesehen, daß die Gasaustrittsöffnungen des Verteilergehäuse in unterschiedlichen Höhen angeordnet sind und/oder unterschiedlich große Durchmesser aufweisen. Hierdurch wird der Anzündeinheit eine definierte und kontrollierte Anzündschwadenaustrittscharakteristik gegeben.

Zum Leiten und Ausrichten der aus den Gasaustrittsöffnungen austretenden Anzündschwaden, Gasen und Flammen ist vorteilhafterweise ferner vorgesehen, daß sich an die Gasaustrittsöffnungen Rohre mit in den Rohrwandungen angeordneten Öffnungen anschließen. Diese Rohre ragen bis relativ weit in die druckgaserzeugende Ladung hinein, sind also von dem gaserzeugenden Material umgeben; hierbei ist pro Gasaustrittsöffnung ein Rohr vorgesehen.

Gemäß einer weiteren vorteilhaften Weiterbildung der Erfindung ist vorgesehen, daß die Kammer in ihrem nicht von dem Verteilergehäuse umgebenden Bereich oder das Verteilergehäuse mit einer Außenrändelung versehen ist, die sich in einen die Kammer bzw. das Verteilergehäuse aufnehmenden Trägerkörper eindrückt. Hierdurch ergibt sich eine unveränderbare Positionierung der Anzündeinheit in dem diese aufnehmenden Trägerkörper. Diese Positionierung ist beispielsweise dann erforderlich, wenn die Anzündeinheit in den Trägerkörper eines rohrförmigen Gasgenerators eingesetzt wird, da dann die Gasaustrittsöffnungen in Richtung der Längsachse das Gasgenerators ausgerichtet bleiben müssen, was durch die Verzahnung der Außenrändelung mit dem Trägerkörper gewährleistet ist.

Nachfolgend werden anhand der Figuren Ausführungsbeispiele der Erfindung näher beschrieben. Im einzelnen zeigen:
- Fig. 1: eine Außenansicht eines Airbag-Gasgenerators, teilweise gebrochen und in diesen Bereichen im Querschnitt dargestellt, und
- Fign. 2 und 3: zwei Ausführungsbeispiele einer beim Gasgenerator gemäß Fig. 1 einsetzbaren Anzündeinheit in einem anderen Maßstab.

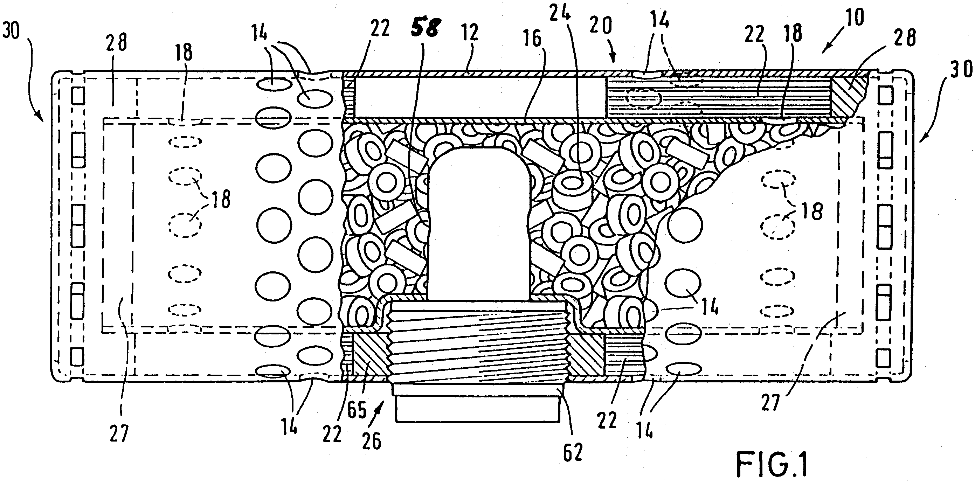

In Fig. 1 ist ein Rohrgasgenerator 10, insbesondere für ein Kraftfahrzeuginsassen-Aufprallschutzkissen (auch "Airbag" genannt), in Außenansicht, teilweise aufgebrochen und geschnitten, dargestellt. Der Rohrgasgenerator 10 weist ein Edelstahl-Außenrohr 12 auf, in dessen Mantel mehrere Gasaustrittsöffnungen 14 ausgebildet sind. Die Gasaustrittsöffnungen 14 sind gleichmäßig verteilt über vier Umfangslinien des Außenrohres 12 angeordnet. Die Gasaustrittsöffnungen 14 befinden sich im wesentlichen im - in axialer Längserstreckung des Rohrgasgenerators betrachtet - mittleren Abschnitt des Außenrohres 12. Innerhalb des Außenrohres 12 ist ein koaxial zu diesem angeordnetes Edelstahl-Innenrohr 16 untergebracht. In den axialen Endabschnitten des Mantels des Innenrohres 16 sind ebenfalls Gasaustrittsöffnungen 18 ausgebildet, wobei diese Gasaustrittsöffnungen 18 gleichmäßig über zwei Umfangslinien im Bereich der Endabschnitte des Innenrohres 16 verteilt angeordnet sind. Zwischen den Gasaustrittsöffnungen 14 des Außenrohres 12 und den Gasaustrittsöffnungen 18 des Innenrohres 16 besteht also ein axialer Abstand.

Der Außendurchmesser des Innenrohres 16 ist kleiner als der Innendurchmesser des Außenrohres 12, so daß zwischen dem Außen- und dem Innenrohr 12,16 ein Ringzwischenraum 20 entsteht. Dieser Ringzwischenraum 20 ist in seinem sich zwischen den Gasaustrittsöffnungen 14,18 der beiden Rohre 12,16 erstreckenden Bereich mit Metallfilter-Paketen 22 (Edelstahl-Drahtgeflechtmatten) ausgefüllt.

Das Innenrohr 16 ist mit gasentwickelndem Material auf Natriumazid-Basis ausgefüllt, das bei seiner Verbrennung Druckgas erzeugt. Das gasentwickelnde Material, auch druckgaserzeugende Ladung genannt, liegt in Form von sogenannten Pellets 24 vor, die ungeordnet in dem Innenrohr 16 untergebracht sind. Eine elektrische Anzündeinheit 26 zum Zünden der druckgaserzeugenden Ladung ist an den beiden Rohren 12,16 befestigt und ragt durch eine Öffnung im Innenrohr 16 in dieses teilweise hinein.

Der Gasgenerator 10 ist an den stirnseitigen Enden 30 des Außenrohres 12 durch scheibenähnliche Verschlußdeckel 28 verschlossen. An den Enden des Innenrohres 16 sind federelastische, kompressible Scheibenelemente 27 aus Keramikfilz oder -gewebe angeordnet, die einerseits gegen die Pellets 24 und andererseits gegen die Innenflächen der Verschlußdeckel 28 abgestützt sind, wobei sie die Pellets 24 mit Federkraft zusammenhalten. Die federnden Scheibenelemente 27 haben die Aufgabe, die Füllmengentoleranzen des Innenrohres 16 auszugleichen und die Pellets 24 auch dann zusammenzuhalten, wenn das Innenrohr 16 nicht vollständig mit gasentwickelndem Material ausgefüllt ist oder sich im Laufe der Zeit durch Vibrationen die Packungsdichte der Pellets 24 erhöht. Die Verschlußdeckel 28 bestehen aus Aluminium und halten bzw. positionieren auch das Innenrohr 16 in hier nicht näher zu beschreibender Weise.

Nachfolgend soll die Funktionsweise des in Fig. 1 dargestellten Gasgenerators 10 beschrieben werden. Die elektrische Anzündeinheit 26, bei der es sich bei diesem Ausführungsbeispiel um einen sogenannten Schichtbrückenzünder mit Initialstoff handelt, wird durch einen definierten elektrischen Impuls gezündet. Bei Verwendung des Rohrgasgenerators gemäß Fig. 1 als Druckgaserzeuger in einem Fahrzeug-Airbag wird dieser elektrische Impuls beispielsweise durch Schließen eines Trägheitsschalters im Falle eines Zusammenstoßes des Kraftfahrzeuges mit einem anderen Gegenstand an die Anzündeinheit 26 angelegt. In der Anzündeinheit 26 wird eine sogenannte Verstärkungsladung gezündet; die dabei entstehenden Anzündschwaden (Flamme, Gas, heiße Verbrennungsprodukte) gelangen über im Gehäuse der Anzündeinheit 26 vorgesehene Öffnungen 58 in den Innenraum des Innenrohres 16, wo sie die (Treibladungs-)Pellets 24 gleichmäßig und gleichzeitig zünden. Im Innenrohr 16 werden je nach Ausführung eine unterschiedliche Menge an gasentwickelndem Material in Gas mit einem Druck von ca. 200 bar umgesetzt. Die heißen Gase, die zu ca. 95 % aus Stickstoff bestehen, gelangen über die Gasaustrittsöffnungen 18 an den Enden des Innenrohres 16 aus diesem heraus zu den Filterpaketen 22. Die Filterpakete 22 haben die Aufgabe, die Gase zu kühlen und von Partikeln (Feststoffen) und Kondensaten zu reinigen. Die derart abgekühlten und gereinigten Gase treten über die Gasaustrittsöffnungen 14 im Außenrohr 12 aus. Der hier beschriebene Gasgenerator 10 erzeugt in einer Zeit von ca. 30 Millisekunden in einem Testvolumen von 60 dm³ einen Gasdruck von ca. 3 bar.

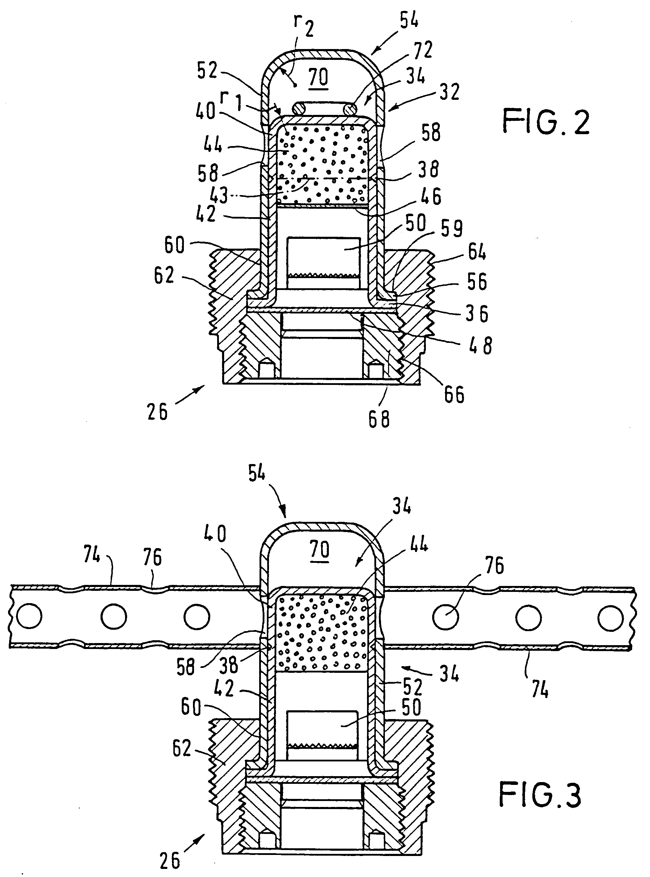

Ein erstes Ausführungsbeispiel für die in Figur 1 dargestellte Anzündeinheit 26 ist in Fig. 2 dargestellt.

Die Anzündeinheit 26 weist eine im wesentlichen hülsenförmige tiefgezogene Kammer 32 auf, deren obere Stirnseite 34 verschlossen ist und die an ihrem dieser Stirnseite 34 abgewandten Ende einen ringförmigen Außenflansch 36 aufweist. Die Kammer 32 ist in ihrem oberen Drittel mit einer geschlossenen Umfangsnut 38 versehen, die im querschnitt betrachtet V-förmig ist und in der Außenseite der Kammer 32 angeordnet ist. Die Umfangsnut 38 unterteilt die Kammer 32 in einen kappenförmigen Deckel 40 sowie einen Behälter 42 und begrenzt eine Öffnung 43 im Behälter 42, die durch den Deckel 40 verschlossen ist. Die Kappe 40 und der obere Bereich des Behälters 42 sind mit einer Anzündladung 44 in Form eines Preßkörpers gefüllt, der an seiner Unterseite mit einer Folie 46 abgedeckt ist. An ihrem mit dem Ringflansch 36 versehenen unteren Ende ist die Kammer 32 durch eine scheibenförmige Platte 48 verschlossen, die an ihrem Rand mit dem Ringflansch 36 verschweißt ist. Die Platte 48 trägt auf ihrer Innenseite ein Anzündelement 50, das beispielsweise elektrisch gezündet wird.

Auf die hülsenförmige Kammer 32 aufgesteckt ist ein ebenfalls hülsenförmiges Verteilergehäuse 52, dessen axiale Länge größer ist als diejenige der Kammer 32 und das ein geschlossenes oberes Ende 54 sowie einen Ringflansch 56 am anderen axialen Ende aufweist. Das Verteilergehäuse 52 ist auf die Kammer 32 aufgesteckt oder mit dieser im Bereich von dessen Behälter 42 fest verbunden. In dem zylindrischen Abschnitt des Verteilergehäuses 52 sind zwei um 180° gegeneinander versetzt angeordnete auf ein und derselben Höhe liegende Gasaustrittsöffnungen 58 ausgebildet, die bei mit dem Behälter 42 verbundenem kappenförmigen Deckel 40 von dessen Umfangsabschnitt verschlossen sind.

Das Verteilergehäuse 52 ist mit der in diesem befindlichen Kammer in die Durchgangsbohrung 60 eines zylindrischen Trägerkörpers 62 eingesteckt, wobei der Ringflansch 56 an einem ringförmigen Versatz 59 in der Durchgangsbohrung 60 anliegt. Der Trägerkörper 62 weist ein Außengewinde 64 sowie in seiner Durchgangsbohrung 60 ein Innengewinde 66 auf, das das Gewinde eines Gewindestopfens 68 aufnimmt, der an der Platte 48 anliegt und über diese sowie den Ringflansch 36 der Kammer 32 das Verteilergehäuse 52 mit dessen Ringflansch 56 gegen den ringförmigen Versatz in der Durchgangsbohrung 60 drückt. Auf diese Weise sind die Kammer und das Verteilergehäuse zwischen dem Trägerkörper 62 und dem Gewindestopfen 68 eingespannt gehalten. Der Trägerkörper 62 kann mit seinem Außengewinde 64 in einen hier nicht näher beschriebenen Haltekörper 65 des in Fig. 1 dargestellten Gasgenerators 10 eingeschraubt werden.

Beim Zusammenbau der Anzündeinheit 26 wird wie folgt verfahren. Zunächst wird der Trägerkörper 62 in die Gehäusewand (Rohre 12,16 mit dazwischenliegendem Haltekörper 65, siehe Fig. 1) des Gasgenerators 10 eingeschraubt. Anschließend wird die Verteilergehäuse-Hülse 52 in die Durchgangsbohrung 60 des Trägerkörpers 62 eingesteckt, bis ihr Ringflansch 56 am ringförmigen Versatz 59 anliegt. Das Verteilergehäuse 52 ist von der Durchgangsbohrung 60 unverdrehbar aufgenommen, was durch eine Außenrändelung am Verteilergehäuse 52 oder eine Innenrändelung in der Durchgangsbohrung erreicht wird. Damit liegt die Ausrichtung der Öffnungen 58 relativ zum Trägerkörper 62 und damit relativ zum Gasgenerator 10 fest. Anschließend wird in das Verteilergehäuse 52 von unten die Kammer 32 eingesteckt, bis ihr Ringflansch 36 an demjenigen des Verteilergehäuses 52 anliegt. Schließlich wird der Gewindestopfen 68 in den Trägerkörper 62 eingeschraubt, so daß Kammer 32 und Verteilergehäuse 52 fest eingespannt gehalten sind.

Nachfolgend soll kurz die Funktionsweise der in Fig. 2 dargestellten Anzündeinheit beschrieben werden. Sobald das Anzündelement 50 elektrisch gezündet ist, entflammt es die Anzündladung 44, bei deren Verbrennung der Gasdruck in der Kammer 32 ansteigt. Durch die V-förmige Umfangsnut 38 ist in der Wand der Kammer 32 eine Sollbruchstelle geschaffen, die aufbricht, sobald der Gasdruck einen bestimmten Wert überschritten hat. Infolge des ansteigenden Gasdruckes löst sich der kappenförmige Deckel 40 vom Kammerbehälter 42 und bewegt sich in den oberhalb des Deckels 40 von dem Verteilergehäuse 52 begrenzten Verteilerraum 70. Bei abgelöstem Deckel 40 ist die Öffnung 43 der Kammer 32 geöffnet. Der gleitend verschiebbar im Verteilergehäuse 52 geführte Deckel 40 prallt mit relativ großer Kraft gegen die Innenfläche des Verteilergehäuses 52 an dessen oberen Ende 54. Zur Dämpfung des Aufpralles ist auf dem Deckel 40 eine Gummi-Rundschnur 72 befestigt, die den größten Teil der kinetischen Energie des Deckels 40 auffängt. Bei seiner axialen Verschiebung im Verteilergehäuse 52 gibt der kappenförmige Deckel 40, dessen Umfangsabschnitt an der Innenfläche des Verteilergehäuses 52 anliegt, die Gasaustrittsöffnungen 58 immer mehr frei, bis diese schließlich gänzlich geöffnet sind. Sobald die Kammer 32 geöffnet ist, d.h. sobald sich der Deckel 40 vom Behälter 42 löst, werden die beiden Gasaustrittsöffnungen 58 geöffnet und zwar gleichzeitig, was vorteilhafterweise durch den abgelösten Deckel 40 erfolgt. Die V-förmige Umfangsnut 38 gewährleistet eine definierte Verdämmmung für die Umsetzung der Anzündladung 44, wodurch über den Umfang der Kammer 32 betrachtet die gleichmäßige Anzündung der in Fig. 1 gezeigten Pellets 24 mit der in Fig. 2 dargestellten Anzündeinheit gewährleistet ist.

Die in Fig. 3 dargestellte Anzündeinheit entspricht im wesentlichen der Anzündeinheit gemäß Fig. 2; gleiche Teile sind demzufolge auch mit den gleichen Bezugszeichen versehen. Im Unterschied zu der Anzündeinheit gemäß Fig. 2 sind bei der Anzündeinheit nach Fig. 3 sogenannte Flammleitrohre 74 vorgesehen, die die Gasaustrittsöffnungen 58 umgeben und mit dem Verteilergehäuse 52 verbunden sind. Die Flammleitrohre 74 weisen ihrerseits mehrere Öffnungen 76 auf, die gleichmäßig verteilt über die Flammleitrohre 74 angeordnet sind. Die Flammleitrohre 74 ragen bis weit in die druckgaserzeugende Ladung 24 (siehe Fig. 1) hinein und bewirken damit das Zünden dieser Ladung in deren Innern. Ferner ist bei der Anzündeinheit gemäß Fig. 3 im Unterschied zu derjenigen nach Fig. 2 als Dämpfvorrichtung zum Dämpfen des Aufpralls des Deckels 40 auf das Verteilergehäuse 52 eine Gummi-Ringschnur nicht vorgesehen. Die Umsetzung der kinetischen Energie der Kappe 40 erfolgt bei dem Ausführungsbeispiel gemäß Fig. 3 durch eine Verformung des Verteilergehäuses 52 in dessen oberem Ende 54. Zu diesem Zweck ist die Krümmung, d.h. der Krümmungsradius r₂ im Übergangsbereich zwischen dem zyldindrischen Abschnitt des Verteilergehäuses 52 und dessen oberen Ende 54 größer als dies beim Deckel 40 der Kammer 32 der Fall ist (Krümmungsradius r₁). Der Deckel 40 verformt also beim Aufprall auf die Innenseite des oberen Ende 54 das Verteilergehäuse 52, wodurch eine Bremsung des Deckels 40 erfolgt.

Den in den Fign. 2 und 3 dargestellten Anzündeinheiten ist gemein, daß mit dem Entstehen des Gasdruckes bei gezündeter Anzündladung 44 in der Kammer 32 zuerst eine einzige Sollbruchstelle (Umfangsnut 38) aufreißt, was sich anschließend auf die beiden bereits vorhandenen Gasaustrittsöffnungen 58 auswirkt. Damit wird der Nachteil vieler bekannter Konstruktionen umgangen, daß sämtliche Gasaustrittsöffnungen einzeln verschlossen sind und durch den entstehenden Gasdruck auch einzeln geöffnet werden müssen.

## Patentansprüche

1. Anzündeinheit, insbesondere für den Gasgenerator einer Kraftfahrzeuginsassen-Aufprallschutzvorrichtung, mit
- einer Kammer (32), in der ein Anzündelement (50) und eine von diesem zündbare Anzündladung (44) angeordnet sind, wobei sich die Kammer (32) bei gezündeter Anzündladung (44) zum Austreten der Anzündgase aus der Kammer (32) öffnet und die Kammer (32) von einem Verteilergehäuse (52) umschlossen ist, das mehrere Gasaustrittsöffnungen (58) aufweist, die sämtlich bei geöffneter Kammer (32) mit dieser über den von dem Verteilergehäuse (52) begrenzten Raum (70) in Verbindung stehen,
**dadurch gekennzeichnet,**
- daß die Kammer (32) aus einem Behälter (42) und einem Deckel (40) besteht, deren Verbindung als Sollbruchstelle (38) zum Ablösen des Deckels (40) von dem Behälter (42) bei gezündeter Anzündladung (44) ausgebildet ist, und
- daß das Verteilergehäuse (52) den Deckel (40) der Kammer (32) umgibt, wobei die Gasaustrittsöffnungen (58) bei mit dem Behälter (42) verbundenem Deckel durch diesen verschlossen sind, und bei abgelöstem Deckel (40) freiliegen.

2. Anzündeinheit nach Anspruch 1, dadurch gekennzeichnet, daß der Deckel (40) vom Verteilergehäuse (52) auffangbar ist.

3. Anzündeinheit nach Anspruch 1 oder 2, dadurch gekennzeichnet, daß zwischen dem Deckel (40) und dem Verteilergehäuse (52) eine den Aufprall des Deckels (40) auf die Verteilergehäuse-Innenfläche abfangende Dämpfvorrichtung (72) vorgesehen ist.

4. Anzündeinheit nach Anspruch 3, dadurch gekennzeichnet, daß die Dämpfvorrichtung als ein federelastisches auf den Deckel (40) aufgebrachtes Material, vorzugsweise ein auf dem Deckel (40) befestigter Rundschnurring aus Gummi ist.

5. Anzündeinheit nach Anspruch 3, dadurch gekennzeichnet, daß der Deckel (40) im Verteilergehäuse (52) gleitend verschiebbar ist und daß sowohl der Deckel (40) als auch das Verteilergehäuse (52) in dessen den Deckel (40) auffangenden Bereich (54) gewölbt ausgebildet sind, wobei der Wölbungsradius (r₁) des Deckels (40) kleiner ist als derjenige (r₂) des Verteilergehäuses (52).

6. Anzündeinheit nach einem der Ansprüche 1 bis 5, dadurch gekennzeichnet, daß die Gasaustrittsöffnungen (58) in unterschiedlichen Höhen angeordnet sind und/oder unterschiedliche Durchmesser aufweisen.

7. Anzündeinheit nach einem der Ansprüche 1 bis 6, dadurch gekennzeichnet, daß die Kammer (32) und das Verteilergehäuse (52) jeweils die Form eines an einer Stirnseite geschlossenen Zylinders aufweisen, wobei der Übergangsbereich zwischen dem Zylindermantel und der Stirnfläche gekrümmt ist.

8. Anzündeinheit nach einem der Ansprüche 1 bis 7, dadurch gekennzeichnet, daß an die Gasaustrittsöffnungen (58) Rohre (74) mit in den Rohrwandungen angeordneten Öffnungen (76) angeschlossen sind.

9. Anzündeinheit nach einem der Ansprüche 1 bis 8, dadurch gekennzeichnet, daß die Kammer (32) in ihren nicht von dem Verteilergehäuse (52) umgebenen Bereich oder das Verteilergehäuse (52) mit einer Außenrändelung zum Eindrücken in einen die Kammer (32) bzw. das Verteilergehäuse (52) aufnehmenden Trägerkörper (62) versehen ist.

## Claims

1. Ignition unit, in particular for the gas generator of an impact protection device for the occupant of a motor vehicle, having
- a chamber (32), in which are arranged an ignition element (50) and an ignition charge (44) ignitable by it, with the chamber (32) opening upon ignition of ignition charge (44) for the issuing of the ignition gases from the chamber (32) and with the chamber (32) being enclosed by a distributor housing (52) which has several gas outlet openings (58) which are all connected to the chamber (32) via the space (70) defined by the distributor housing (52) when the chamber is open,
characterized in that
- the chamber (32) consists of a container (42) and a cover (40), the connection of which is formed as predetermined breaking position (38) for the separation of the cover (40) from the container (42) when the ignition charge (44) is ignited, and in that
- the distributor housing (52) surrounds the cover (40) of the chamber (32), with the gas outlet openings (58) being closed by the cover when the cover is connected to the container (42), and being open when the cover (40) is separated.

2. Ignition unit according to claim 1, characterized in that the cover (40) can be intercepted by the distributor housing (52).

3. Ignition unit according to claim 1 or 2, characterized in that between the cover (40) and the distributor housing (52) there is provided an absorbing device (72) which absorbs the impact of the cover (40) on to the inner surface of the distributor housing.

4. Ignition unit according to claim 3, characterized in that the absorbing device is a resilient-elastic material applied to the cover (40), preferably a rubber sealing ring fastened on to the cover (40).

5. Ignition unit according to claim 3, characterized in that the cover (40) in the distributor housing (52) can be displaced in a sliding manner and in that both the cover (40) and the distributor housing (52) in the region (54) intercepting the cover (40) are constructed in a curved manner, with the curvature radius (r₁) of the cover (40) being smaller than that (r₂) of the distributor housing (52).

6. Ignition unit according to one of claims 1 to 5, characterized in that the gas outlet openings (58) are arranged at different heights and/or have different diameters.

7. Ignition unit according to one of claims 1 to 6, characterized in that the chamber (32) and the distributor housing (52) each have the form of a cylinder closed at one front side, with the transition region between the cylinder wall and the front surface being bent.

8. Ignition unit according to one of claims 1 to 7, characterized in that tubes (74) with openings (76) arranged in the tube walls are attached to the gas outlet openings (58).

9. Ignition unit according to one of claims 1 to 8, characterized in that the chamber (32), in the region which is not surrounded by the distributor housing (52), or the distributor housing (52), is provided with an outer knurled edge for the impressing into a carrier body (62) receiving the chamber (32) or the distributor housing (52).

## Revendications

1. Détonateur, en particulier pour le générateur de gaz d'un dispositif de protection des occupants d'un véhicule automobile en cas de choc, comprenant :
- une chambre (32) dans laquelle sont disposés un élément d'amorçage (50) et une charge d'amorçage (44) susceptible d'être mise à feu par cet élément, la chambre (32) s'ouvrant, lorsque la charge d'amorçage (44) est mise à feu, pour permettre la sortie des gaz d'amorçage de la chambre (32), et la chambre (32) étant entourée d'un boîtier distributeur (52) présentant plusieurs ouvertures de sortie de gaz (58) qui, lorsque la chambre (32) est ouverte, communiquent avec cette dernière en passant par l'espace (70) délimité par le boîtier distributeur (52),
*caractérisé par le fait*
- que la chambre (32) est constituée par un récipient (42) et un couvercle (40) dont la liaison est réalisée sous forme de zone de rupture (38) pour permettre au couvercle (40) de se séparer du récipient (42) lorsque la charge d'amorçage (44) est mise à feu, et
- que le boîtier distributeur (32) entoure le couvercle (40) de la chambre (32), les ouvertures de sortie de gaz (58) étant obturées par le couvercle (40) lorsque ce dernier est relié au récipient (42) et étant dégagées lorsque le couvercle (40) est séparé du récipient (42).

2. Détonateur suivant la revendication 1, caractérisé par le fait que le couvercle (40) peut être intercepté par le boîtier distributeur (52).

3. Détonateur suivant la revendication 1 ou 2, caractérisé par le fait qu'un dispositif amortisseur (72) amortissant l'impact du couvercle (50) sur la surface intérieure du boîtier distributeur (52) est prévu entre le couvercle (40) et le boîtier distributeur (52).

4. Détonateur suivant la revendication 3, caractérisé par le fait que le dispositif amortisseur est constitué par un matériau élastique rapporté sur le couvercle (40), de préférence par un joint torique en caoutchouc fixé sur le couvercle (40).

5. Détonateur suivant la revendication 3, caractérisé par le fait que le couvercle (40) est mobile en translation dans le boîtier distributeur (52) et qu'aussi bien le couvercle (40) que le boîtier distributeur (52), dans sa zone (54) interceptant le couvercle (40), sont bombés, le rayon de bombement (r₁) du couvercle (40) étant plus petit que le rayon de bombement (r₂) du boîtier distributeur (52).

6. Détonateur suivant l'une des revendications 1 à 5, caractérisé par le fait que les ouvertures de sortie de gaz (58) sont disposées à des hauteurs différentes et/ou présentent des diamètres différents.

7. Détonateur suivant l'une des revendications 1 à 6, caractérisé par le fait que la chambre (32) et le boîtier distributeur (52) présentent chacun la forme d'un cylindre fermé sur un côté frontal, la zone de raccordement entre la paroi latérale du cylindre et la paroi frontale étant incurvée.

8. Détonateur suivant l'une des revendications 1 à 7, caractérisé par le fait que des tubes (74) comportant des ouvertures (76) dans leurs parois sont raccordés aux ouvertures de sortie de gaz (58).

9. Détonateur suivant l'une des revendications 1 à 8, caractérisé par le fait que la chambre (32), dans sa zone non entourée par le boîtier distributeur (52), ou le boîtier distributeur (52) est muni d'un moletage extérieur en vue de l'enfoncement dans un corps de support (62) recevant la chambre (32) ou le boîtier distributeur (52).
